# EUROPÄISCHE PATENTSCHRIFT

(11) **EP 2 886 181 B1**
(45) Veröffentlichungstag und Bekanntmachung des Hinweises auf die Patenterteilung: **15.07.2020**
(21) Anmeldenummer: 14188339.7
(22) Anmeldetag: 09.10.2014
(51) Int. Cl.: B01D 35/30, B01D 36/00

(54) **Flüssigkeitsfilter**
Liquid filter
Filtre à liquide

(30) Priorität: 20.12.2013 DE 102013226810
(43) Veröffentlichungstag der Anmeldung: 24.06.2015
(73) Patentinhaber: Robert Bosch GmbH, 70442 Stuttgart (DE)
(72) Erfinder: Ayza Parra, David, CP. 12100 Castellon de la Plana (ES)

(56) Entgegenhaltungen:
- WO-A1-2007/010037
- WO-A2-2008/020219
- DE-A1- 19 646 248

## Beschreibung

### Gebiet der Erfindung

Die Erfindung betrifft einen Flüssigkeitsfilter zur Filterung von Partikeln aus einer Flüssigkeit. Die Erfindung betrifft weiterhin ein Filtergehäuse für einen Flüssigkeitsfilter und ein oberes Filtergehäuseteil für einen Flüssigkeitsfilter.

### Stand der Technik

Kraftstoffversorgungssysteme und Kraftstoffeinspritzsysteme für Brennkraftmaschinen, insbesondere für Benzin oder Diesel, können durch Luft im Kraftstoff beeinträchtigt werden. Unkontrolliert in ein Kraftstoffeinspritzsystem einströmende Luft kann dort beispielsweise Rostbildung befördern, Fehlzündungen in der Brennkraftmaschine auslösen, zu einem Motorstopp führen oder andere Beeinträchtigungen der an das Kraftstoffversorgungssystem angeschlossenen Brennkraftmaschine bewirken. Luft kann sich im Kraftstoff beispielsweise während des Tankvorgangs oder bei Wartungsarbeiten lösen bzw. ansammeln.

Aus der WO 2008/020219 A2 ist ein Flüssigkeitsfilter mit Entlüftungssystem auf der Rohseite bekannt.

Aus der WO 2007/010037 A1 ist ein Kraftstofffilter mit einer Entlüftungsvorrichtung auf der Rohseite bekannt.

### Offenbarung der Erfindung

Die Erfindung betrifft einen Flüssigkeitsfilter gemäß Anspruch 1.

Die Erfindung geht aus von der Erkenntnis, dass für die zuverlässige Funktion von Flüssigkeitsfiltern bzw. Filtergehäusen für Flüssigkeitsfilter, z.B. für die Filterung von Kraftstoffen, Einrichtungen vorzusehen sind, die zur Entgasung des den Filter passierenden Kraftstoffs dienen bzw. zur Entlüftung von im Flüssigkeitsfilter angesammelter Luft.

Dazu können an der bezüglich der Schwerkraftrichtung oberen Seite eines Flüssigkeitsfilters Entlüftungseinrichtungen vorgesehen werden, welche nach einem Filteraustausch oder einer Wartung geöffnet werden, um die sich im Kraftstofffilter angesammelte Luft zu entfernen. Diese Entlüftungssysteme entfernen die Luft jedoch nur, wenn die Entlüftungseinrichtung geöffnet wird. Wird die Entlüftungseinrichtung über längere Zeit nicht geöffnet kann z.B. die Filtereffizienz verringert sein, da große Teile der Filterflächen mit Luft belegt sind.

Eine andere Möglichkeit, die im Flüssigkeitsfilter gesammelte Luft für das Kraftstoffversorgungssystem unschädlich zu machen, geht aus von der Erkenntnis, dass die Größe der Luftbläschen eine entscheidende Rolle hinsichtlich ihres Störpotenzials spielt. So kann die Größe der Luftbläschen im Kraftstoff durch geeignete Maßnahmen stark verkleinert werden. Unterschreiten die Luftbläschen eine bestimmte Größe, so sind sie für die Wirkung des Kraftstoffversorgungssystems und für die Brennkraftmaschine unter normalen Betriebsbedingungen unschädlich.

Erfindungsgemäß wird ein Flüssigkeitsfilter zur Filterung von Partikeln aus einer Flüssigkeit, z.B. für Kraftstoffe wie zum Beispiel Benzin oder Diesel, vorgeschlagen. Der Flüssigkeitsfilter umfasst ein Filtergehäuse, ein Filterelement, das im Innern des Filtergehäuses angeordnet ist. Das Filterelement trennt dort eine Reinseite, auf welcher die von Partikeln und gegebenenfalls auch von Wasser gereinigte Flüssigkeit vorliegt von einer Rohseite, auf welcher die ungereinigte Flüssigkeit vorliegt. Das Filtergehäuse weist weiterhin einen auf der Außenseite des Filtergehäuses angeordneten Abführ-Kanal auf, der über einen in einer ersten Wandung des Filtergehäuses ausgebildeten Auslass-Kanal mit der Reinseite fluidleitend verbunden ist. Erfindungsgemäß umfasst der Flüssigkeitsfilter weiterhin wenigstens einen benachbart zum Auslass-Kanal angeordneten Entlüftungs-Kanal, der in der ersten Wandung des Filtergehäuses ausgebildet ist, wobei der wenigstens eine Entlüftungs-Kanal die Reinseite im Innern des Filtergehäuses mit dem Abführ-Kanal verbindet.

Erfindungsgemäß ist außerdem ein Filtergehäuse für einen Flüssigkeitsfilter vorgesehen, wobei das Filtergehäuse eingerichtet ist, eine Reinseite von einer Rohseite zu trennen, wobei das Filtergehäuse einen auf der Außenseite des Filtergehäuses angeordneten Abführ-Kanal umfasst, der über einen in einer ersten Wandung des Filtergehäuses ausgebildeten Auslass-Kanal mit der Reinseite fluidleitend verbunden ist. Erfindungsgemäß umfasst das Filtergehäuse weiterhin wenigstens einen benachbart zum Auslass-Kanal angeordneten Entlüftungs-Kanal, der in der ersten Wandung des Filtergehäuses ausgebildet ist, wobei der wenigstens eine Entlüftungs-Kanal die Reinseite im Innern des Filtergehäuses mit dem Abführ-Kanal verbindet.

### Vorteile der Erfindung

Im Sinne dieser Anmeldung werden unter dem Begriff "Luft" ganz allgemein Gase verstanden, d.h. auch ein Gasvolumen, welches eine andere chemische Zusammensetzung aufweist, als die in der Atmosphäre vorkommende Luft. Der Begriff "Fluid" umfasst im Sinne dieser Anmeldung Flüssigkeiten und Gase.

Gegenüber dem Stand der Technik weist der erfindungsgemäße Flüssigkeitsfilter den Vorteil auf, dass über den Entlüftungs-Kanal Luft, welche sich auf der Reinseite des Flüssigkeitsfilters angesammelt hat, in kleine Bläschen zerteilt und kontrolliert in den Abführ-Kanal abgeleitet werden kann. Die aus dem Abführ-Kanal den stromabwärts des Flüssigkeitsfilters gelegenen Komponenten beispielsweise eines Kraftstoffversorgungssystems zugeführte gereinigte Flüssigkeit weist dann nur noch kleine Luftbläschen auf, welche diese Komponenten nicht beschädigen können und sie auch nicht in ihrer Funktion beeinträchtigen. Ein weiterer Vorteil besteht darin, dass wegen des auf der Reinseite angeordneten Entlüftungs-Kanals dieser nicht durch Partikel verstopft werden kann und somit über Lebensdauer eine zuverlässige Entlüftung gewährleistet ist. Gleichzeitig wird dadurch vorteilhaft ganz ohne am Entlüftungs-Kanal angeordnete zusätzliche Partikelfilter bewirkt, dass keine ungefilterte Flüssigkeit in den Abführ-Kanal gelangt. Ein solcher Partikelübertritt ist beispielsweise in Kraftstoffversorgungssysteme mit einem Kraftstofffilter möglich, welcher einen auf der Rohseite angeordneten Entlüftungs-Kanal aufweist, wodurch für die stromabwärts des Flüssigkeitsfilters gelegenen Komponenten das Risiko besteht, unerwünschten Partikeln ausgesetzt zu werden. Um dies zu verhindern, sind aufwändige Filtereinrichtungen am Entlüftungs-Kanal notwendig, auf welche in der vorliegenden Erfindung verzichtet werden kann. Ein weiterer Vorteil gegenüber einem auf der Rohseite angeordneten Entlüftungs-Kanal ist darin zu sehen, dass Druckpulsationen, welche beispielsweise durch eine stromabwärts des Flüssigkeitsfilters angeordnete KraftstoffEinspritzpumpe erzeugt werden, nicht über den Entlüftungs-Kanal direkt auf die Rohseite des Flüssigkeitsfilters durchschlagen können und dadurch vorteilhaft ein Losrütteln von Partikeln und der Übertritt von Partikeln durch den Entlüftungs-Kanal hindurch in den Abführ-Kanal schon allein konstruktionsbedingt unterbunden ist. Weiterhin vorteilhaft lässt sich die erfindungsgemäße Vorrichtung besonders einfach und kostengünstig herstellen, da der Entlüftungs-Kanal in der ersten Wandung des Filtergehäuses angeordnet ist und somit in das Filtergehäuse integriert ist. So lässt sich beispielsweise ein aus Kunststoff hergestelltes, spritzgegossenes Filtergehäuse sehr fertigungssicher und kostengünstig herstellen. Vorteilhaft kann dann beispielsweise auch das Filterelement besonders einfach und kostengünstig gehalten werden kann, da aufgrund der Integration des Entlüftungs-Kanal in das Filtergehäuse das Filterelement nicht mit einer Entlüftungsvorrichtung versehen sein muss.

Gegenüber dem Stand der Technik weist das erfindungsgemäße Filtergehäuse den Vorteil auf, dass der Entlüftungs-Kanal in das Filtergehäuse integriert ist, vorzugsweise, ohne am oder im Entlüftungs-Kanal angeordnete bewegliche Teile, wodurch sich das Filtergehäuse besonders einfach und kostengünstig, beispielsweise durch ein Spritzguss-Verfahren herstellen lässt. Weiterhin wird durch den auf der Reinseite angeordneten Entlüftungs-Kanal vorteilhaft bewirkt, dass der Entlüftungs-Kanal nicht durch Partikel zugesetzt werden kann und dass auch keine Partikel durch den Entlüftungs-Kanal in stromabwärts des Filtergehäuses gelegene Komponenten beispielsweise eines Kraftstoffversorgungssystems gelangen können.

Gegenüber dem Stand der Technik weist das erfindungsgemäße obere Filtergehäuseteil die oben vorgetragenen Vorteile auf. Vorteilhaft ist weiterhin an dem erfindungsgemäßen oberen Filtergehäuseteil mit dem drin integrierten Entlüftungs-Kanal, dass auf diese Weise ein einziges oberes Filtergehäuseteil, das beispielsweise als Gehäusedeckel ausgebildet ist, für verschiedene untere Filtergehäuseteile bzw. Gehäusebecher verwendet werden kann. Dadurch kann es in hohen Stückzahlen besonders kostengünstig hergestellt werden.

Vorteilhafte Ausbildungen und Weiterbildungen der Erfindung werden durch die in den abhängigen Ansprüchen angegebenen Merkmale und Maßnahmen bewirkt.

Eine Weiterbildung der Erfindung sieht vor, dass der wenigstens eine Entlüftungs-Kanal die Reinseite mit dem Abführ-Kanal unterbrechungsfrei verbindet.

Mit dem Begriff "unterbrechungsfrei" ist im Sinne dieser Anmeldung gemeint, dass die Reinseite im Innern des Filtergehäuses mit dem Abführ-Kanal zeitlich kontinuierlich bzw. ununterbrochen bzw. permanent in einer fluidleitenden Verbindung steht, beispielsweise in einer direkten, unmittelbar von der Reinseite in den Abführ-Kanal führenden Verbindung, die auch nicht zeitweise durch ventilartige Elemente unterbrochen wird. Neben der zeitlichen Dimension ist der Begriffs "unterbrechungsfrei" gleichzeitig auch in räumlicher Hinsicht zu verstehen, nämlich dahingehend, dass im Entlüftungs-Kanal keinerlei konstruktive Elemente vorgesehen sind, die die Fluid leitende Verbindung zwischen der Reinseite und dem Abführ-Kanal unterbrechen.

Eine weitere Ausbildung der Erfindung sieht vor, dass am und im Entlüftungs-Kanal keine beweglichen Teile angeordnet sind.

Mit dem Ausdruck "keine beweglichen Teile angeordnet sind" ist im Sinne dieser Anmeldung gemeint, dass keine beweglichen Teile konstruktiv vorgesehen sind, die geeignet sind, den Strömungswiderstand in dem Entlüftungs-Kanal deutlich zu verändern oder den Entlüftungs-Kanal zu verschließen. Partikel oder ausgeflockte Flüssigkeit, beispielsweise Paraffin aus Diesel, sind im Kontext dieser Anmeldung nicht unter diesen "beweglichen Teilen" zu verstehen.

Durch diese Weiterbildungen der unterbrechungsfreien Verbindung zwischen der Reinseite und dem Abführ-Kanal mittels des Entlüftungs-Kanals bzw. dadurch, dass am und im Entlüftungs-Kanal keine beweglichen Teile angeordnet sind, wird vorteilhaft bewirkt, dass sich das Filtergehäuse mit wenigen Teilen, in einfachen Prozessen besonders kostengünstig und einfach herstellen lässt und über Lebensdauer wartungsfrei und betriebssicher betrieben werden kann. Es ist zudem vorteilhaft äußerst robust gegenüber mechanischen Beanspruchungen wie z.B. Vibrationen und Stößen, da keine beweglichen Teile vorhanden sind, die durch derartige Einflüsse in ihrer Funktionalität kurzzeitig oder dauerhaft beeinträchtigt werden können, z.B. durch Bruch oder Zusetzen oder Festsetzen oder Verschleiß.

Dadurch, dass an dem dem Innern des Filtergehäuses zuweisenden Ende des Auslass-Kanals ein ins Innere des Filtergehäuses hineinragendes Tauchrohr mit einem Tauchrohrkanal angeordnet ist, wobei der Tauchrohrkanal mit dem Abführ-Kanal fluidleitend verbunden ist, wird vorteilhaft bewirkt, dass sich die aus der Flüssigkeit ausperlende Luft im bezüglich der Schwerkraft Richtung oberen Teil des Filtergehäuses sammeln kann, ohne unkontrolliert durch den Auslass-Kanal in den Abführ-Kanal hindurchtreten zu können. Denn durch den auf der Reinseite herrschenden Druck, welcher dort üblicherweise geringer ist als der auf der Rohseite herrschende Druck kann die Flüssigkeit weniger Gas lösen und zumindest ein Teil des in der Flüssigkeit gelösten Gases entgast in Form von Bläschen. Diese steigen in Folge der geringeren Dichte des Gases gegenüber der Flüssigkeit entgegen der Schwerkraftwirkung nach oben auf. Durch das in die Reinseite hineinragende Tauchrohr ist somit eine Art Siphon geschaffen, so dass nur Flüssigkeit den Flüssigkeitsfilter bzw. das Filtergehäuse durch das Tauchrohr verlässt, nicht jedoch das gesammelte Gas. Das an der Oberseite des Filtergehäuses gesammeltem Gas bleibt im Raum zwischen den Wänden des Filtergehäuses und der Außenwand des Tauchrohrs an der Oberseite des Filtergehäuses gefangen, während die gereinigte Flüssigkeit durch die tiefer gelegene Öffnung des Tauchrohrs in den Tauchrohrkanal und von dort über den Auslass-Kanal in den Abführ-Kanal zu den stromabwärts des Flüssigkeitsfilters gelegenen Komponenten beispielsweise eines Kraftstoffversorgungssystems geleitet wird. Die Entlüftung geschieht dann in kontrollierter Weise durch den Entlüftungs-Kanal hindurch. Durch das Tauchrohr wird somit vorteilhaft eine besonders effektive Trennung der aus der Flüssigkeit entgasten Luft und der gereinigten Flüssigkeit bewirkt und die kontrollierte Entlüftung der gesammelten Luft über den Entlüftungs-Kanal ermöglicht.

Dadurch, dass die dem Innern des Filtergehäuses zuweisende Öffnung des wenigstens einen Entlüftungs-Kanals zwischen dem Tauchrohrkanal und einer als Seitenwand ausgebildeten zweiten Wandung des Filtergehäuses angeordnet ist, wird vorteilhaft bewirkt, dass sich im oberen Bereich des Filtergehäuses gesammelte Luft besonders einfach und kontrolliert über den Entlüftungs-Kanal in den Abführ-Kanal ableiten lässt.

So besteht der Vorteil dieser Weiterbildung beispielsweise gegenüber Konstruktionen mit Rückschlagventil in Form von Kugelventilen oder Membranventilen oder Rückschlagklappen am Einlass und/oder Auslass des Entlüftungs-Kanals darin, dass mangels derartiger beweglicher Teile die Weiterbildung der Erfindung besonders wartungsarm und zuverlässig funktioniert. Denn die wichtige Funktion der kontinuierlichen Entlüftung über den Entlüftungs-Kanal wird dadurch weder durch hohe oder tiefe Temperaturen, zum Beispiel im Bereich von -40°C bis 120°C mit eventueller Eiskristallbildung oder Paraffinbildung, welche derartige bewegliche Teile in ihrer Funktion beeinträchtigen könnten, noch durch Druckschwankungen noch durch die Ablagerung von Partikeln oder anderen Fremdstoffen beeinträchtigt. Zudem wird der Herstellungsaufwand für den Entlüftungs-Kanal deutlich herabgesetzt, da bei der Herstellung des Filtergehäuses keine zusätzlichen Teile am oder im Entlüftungs-Kanal montiert werden müssen. Insgesamt wird derart ein besonders robustes und kostengünstig herstellbares Entlüftungssystem für den Flüssigkeitsfilter bereitgestellt.

Dadurch, dass die den wenigstens einen Entlüftungs-Kanal aufweisende erste Wandung des Filtergehäuses zusammen mit dem Tauchrohr und einem den Abführ-Kanal umschließenden Abführrohr einteilig ausgebildet ist, wird vorteilhaft bewirkt, dass das Filtergehäuse besonders kostengünstig, beispielsweise einem Spritzguss-Verfahren herstellbar ist. Vorteilhaft kann dadurch die Einheit aus erster Wandung, Tauchrohr, Abführrohr und Entlüftungs-Kanal beispielsweise als ein abnehmbarer Deckel des Filtergehäuses hergestellt werden, der auf einen das restliche Filtergehäuse ausmachenden Gehäusebecher aufsetzbar ist. Durch die einteilige Ausbildung ist auch eine besonders einfache Qualitätskontrolle unmittelbar nach der Herstellung der Einheit möglich, beispielsweise der Durchmesser der Öffnungen und Kanäle sowie das Freisein von z.B. Spritzhäuten in den Kanälen. Dadurch wird vorteilhaft die Zuverlässigkeit des Flüssigkeitsfilters und der Entlüftungseinheit verbessert.

Dadurch, dass der wenigstens eine Entlüftungs-Kanal sich in normaler Einbaulage des Flüssigkeitsfilters entlang der Schwerkraftrichtung erstreckt und die erste Wandung bezüglich der Schwerkraftrichtung als obere Wandung des Filtergehäuses ausgebildet ist wird vorteilhaft erreicht, dass die im oberen Bereich des Filtergehäuses angesammelte Luft durch den im Wesentlichen vertikal ausgerichteten Entlüftungs-Kanal dosiert in den Abführ-Kanal abgeleitet wird. Durch die vertikale Ausrichtung des Entlüftungs-Kanal, d.h. dadurch, dass der Entlüftungs-Kanal sich entlang der Schwerkraftrichtung erstreckt, wird sichergestellt, dass die Luft auch ohne die Aufwendung eines zusätzlichen Druckes allein aufgrund ihrer gegenüber der Flüssigkeit geringeren Dichte stets entgegen der Schwerkraftrichtung vollständig aus dem Filtergehäuse in den Abführ-Kanal abgeführt wird.

Eine Weiterbildung des Flüssigkeitsfilters sieht vor, dass das Filterelement zylindrisch ausgebildet ist und entlang seiner Längsachse eine Aussparung aufweist, wobei die Aussparung die Reinseite umschließt, wobei das Tauchrohr in die Aussparung hineinragt wobei die dem Innern des Filtergehäuses zuweisende Innenöffnung des wenigstens einen Entlüftungs-Kanals zwischen der Tauchrohrkanal-Innenwand und der Aussparungs-Innenwand angeordnet ist. Durch diese Weiterbildung wird vorteilhaft bewirkt, dass die sich auf der Reinseite des Filterelements ansammelnde Luft direkt aus dem Bereich der Aussparung abgeleitet werden kann, wodurch das Filtergehäuse und die Entlüftungsvorrichtung besonders kompakt gebaut werden kann. Dadurch entfallen aufwändige und viel Bauraum einnehmende Konstruktionen für die Entlüftungsvorrichtung.

Eine Weiterbildung der Erfindung sieht vor, dass das Tauchrohr entlang seiner Erstreckungsrichtung eine Tauchrohrachse aufweist, wobei die Tauchrohrwandung eine Einwölbung aufweist, die sich längst der Tauchrohrachse erstreckt, wobei die Einwölbung wenigstens eine quer zur Tauchrohrachse verlaufende Begrenzungswand aufweist, wobei die dem Innern des Filtergehäuses zuweisenden Innenöffnung des wenigstens einen Entlüftungs-Kanals in der Begrenzungswand angeordnet ist. Durch diese Weiterbildung wird vorteilhaft bewirkt, dass die Entlüftungsvorrichtung mit dem Tauchrohr einstückig ausgebildet werden kann und dass die Entlüftungseinrichtung dadurch besonders raumsparend herstellbar ist. Die Tauchrohrwandung kann dabei vorteilhafterweise derart ausgebildet sein, dass sie auf ihrer Innenseite den Tauchrohrkanal gegen den in der Tauchrohrwandung bzw. unmittelbar außerhalb der Tauchrohrwandung verlaufenden Entlüftungs-Kanal abgrenzt. Auf diese Weise ist das Tauchrohr besonders kostengünstig herstellbar. Dadurch, dass die Tauchrohrachse in normaler Einbaulage des Flüssigkeitsfilters beispielsweise entlang der Schwerkraftrichtung verläuft, werden in dieser Weiterbildung die Siphon-Wirkung des Tauchrohrs und die Entlüftungswirkung des Entlüftungs-Kanals vorteilhaft verbessert. Wenn das Filtergehäuse z.B. im Bereich des Tauchrohrs seine entgegen der Schwerkraftrichtung betrachtet höchste Erhebung im Innern aufweist, so wird durch diese Weiterbildung der Erfindung vorteilhafterweise zusätzlich bewirkt, dass eine möglichst vollständige Entlüftung des Innern des Filtergehäuses stattfinden kann, da sich dann der Entlüftungs-Kanal annähernd am höchsten Punkt des Filtergehäuses befindet.

Dadurch, dass der wenigstens eine Entlüftungs-Kanal in wenigstens einem Querschnitt einen Durchmesser von 0,05mm bis 2mm aufweist, bevorzugt einen Durchmesser von 0,1 mm bis 1mm, ganz besonders bevorzugt einen Durchmesser von 0,3mm bis 0,7mm mit einem Mittelwert von 0,4mm wird vorteilhaft bewirkt, dass ein ausreichender Durchtritt von Luft bzw. Gas durch den Entlüftungs-Kanal gewährleistet ist, um den Flüssigkeitsfilter auch bei einem verstärkten Anfall von Luft zuverlässig entlüften zu können und damit seine Funktionsfähigkeit zu gewährleisten. Außerdem wird durch die Wahl eines derartigen Durchmessers die Abgabe der zu entlüftenden Luft derart gesteuert, dass im Abführ-Kanal nur noch Luftbläschen einer Größe auftreten, die für die dem Flüssigkeitsfilter nachgelagerten Komponenten beispielsweise eines Kraftstoffversorgungssystems unbedenklich sind. Über die Wahl des Durchmessers an der engsten Stelle des Entlüftungs-Kanals lässt sich die Entlüftungsrate und die Bläschengröße der entlüfteten Luft im Abführ-Kanal gezielt einstellen und an die Gegebenheiten im dem Flüssigkeitsfilter nachgelagerten System anpassen. Der Querschnitt des wenigstens einen Entlüftungs-Kanals kann beispielsweise kreisrund, elliptisch, dreieckig, viereckig, oder allgemein vieleckig ausgebildet sein. Unter einem Durchmesser ist dann ein den Querschnitt des Entlüftungs-Kanals von einer Innenwandung zur bezüglich des Zentrums des Querschnitts gegenüberliegenden Innenwandung durchmessender Abstand zu verstehen.

Eine Weiterbildung der Erfindung sieht vor, dass sich der Durchmesser des wenigstens einen Entlüftungs-Kanal entlang seiner Erstreckungsrichtung in der ersten Wandung an seinem dem Abführ-Kanal zuweisenden Ende verjüngt. Durch diese Weiterbildung wird vorteilhaft bewirkt, dass die Größe der in den Abführ-Kanal abgegebenen Luftbläschen unmittelbar beim Übertritt in den Abführ-Kanal durch den verjüngten Durchmesser definiert wird. Es wird dadurch vorteilhaft das Risiko minimiert, dass sich durch Adhäsionskräfte zwei kleine Bläschen nach ihrer Bildung und vor dem Eintritt in den Abführ-Kanal wieder zu einem größeren Bläschen vereinigen können und auf diese Weise eine für das dem Filter nachgelagerten System bedenkliche Größe erreichen.

Ausführungsformen der Erfindung sind in den Zeichnungen dargestellt und werden in der nachfolgenden Beschreibung näher erläutert.

Es zeigen:
Fig. 1a einen Querschnitt durch ein erstes Ausführungsbeispiel des erfindungsgemäßen Flüssigkeitsfilters,
Fig. 1b einen vergrößerten Ausschnitt des Bereichs des Tauchrohrs und des Entlüftungs-Kanals aus Fig. 1a,
Fig. 1c eine perspektivische Aufsicht auf das Tauchrohr in den Tauchrohrkanal hinein und auf den Entlüftungs-Kanal aus Fig. 1a,
Fig. 2a einen Querschnitt durch ein zweites Ausführungsbeispiel des erfindungsgemäßen Flüssigkeitsfilters,
Fig. 2b einen vergrößerten Ausschnitt des Bereichs des Tauchrohrs und des Entlüftungs-Kanals aus Fig. 2a,
Fig. 2c einen Querschnitt quer zur Tauchrohrachse durch den Flüssigkeitsfilter aus Fig. 2a,
Fig. 2d eine perspektivische Aufsicht auf das Tauchrohr in den Tauchrohrkanal hinein und auf den Entlüftungs-Kanal aus Fig. 2a,
Fig. 3a einen Querschnitt durch ein drittes Ausführungsbeispiel des erfindungsgemäßen Flüssigkeitsfilters,
Fig. 3b einen vergrößerten Ausschnitt des Bereichs des Tauchrohrs und des Entlüftungs-Kanals aus Fig. 3a,
Fig. 3c eine perspektivische Aufsicht auf das Tauchrohr in den Tauchrohrkanal hinein und auf den Entlüftungs-Kanal aus Fig. 3a.

### Ausführungsformen der Erfindung

Bei den in den Zeichnungen verwendeten Bezugszeichen weisen Elemente mit gleicher Funktion das gleiche Bezugszeichen auf.

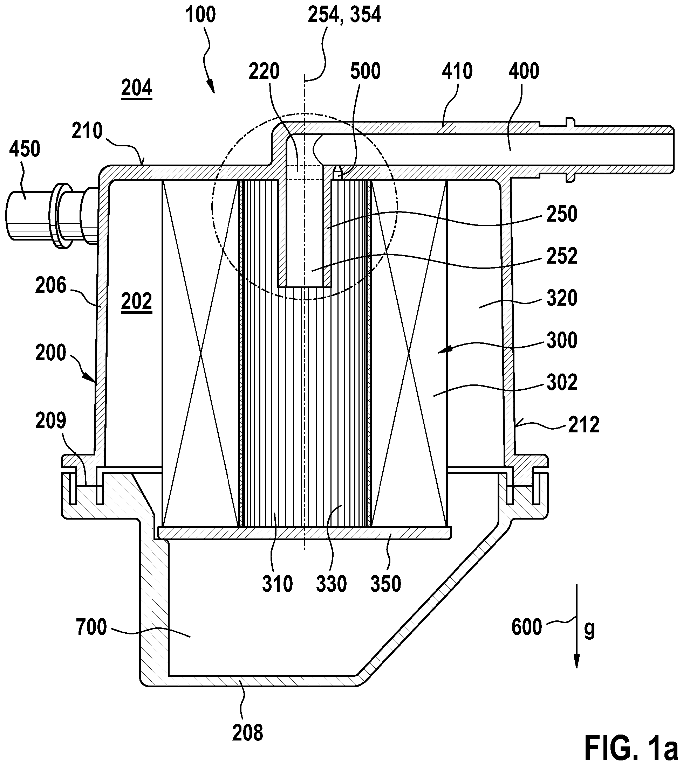

Fig. 1a zeigt einen erfindungsgemäßen Flüssigkeitsfilter 100. Der Flüssigkeitsfilter 100 umfasst ein erfindungsgemäßes Filtergehäuse 200 mit einem Innern 202 des Filtergehäuses 200 und einer Außenseite 204 des Filtergehäuses. Die Außenseite 204 bzw. der Außenraum ist dabei fluiddicht vom Innern 202 des Filtergehäuses 200 abgetrennt.

Im dargestellten Ausführungsbeispiel ist das Filtergehäuse 200 zweiteilig aufgebaut und besteht beispielsweise aus einem Metall oder aus einem Kunststoff, wobei das Filtergehäuse 200 als Spritzgussteil zum Beispiel aus Polyamid hergestellt sein kann. Es weist ein oberes Filtergehäuseteil 206 auf, das mit einem unteren Filtergehäuseteil 208 in einem Befestigungsbereich 209 fluiddicht verbunden ist, beispielsweise durch eine Schraubverbindung, eine Bajonettverbindung, eine Klebeverbindung oder eine Klemmverbindung.

In normaler Einbaulage befindet sich das obere Filtergehäuseteil 206 bezüglich der Schwerkraftrichtung **g**, welche durch den Pfeil mit dem Bezugszeichen 600 gekennzeichnet ist, oberhalb des unteren Filtergehäuseteils 208. Das untere Filtergehäuseteil 208 ist als Wassersammelraum 700 ausgebildet. Im Innern 202 des Filtergehäuses 200 ist ein Filterelement 300 mit einer Filterelement-Längsachse 354 angeordnet. Das Filterelement 300 weist eine erste Endkappe 350 und ein im dargestellten Ausführungsbeispiel hohlzylindrisches, sternförmig gefaltetes Filtermedium 302 auf. In seinem Inneren weist das Filterelement 300 eine Aussparung 330 auf und ist an seiner in der Figur unteren Stirnseite fluiddicht mit der ersten Endkappe 350 verbunden. Das Filtermedium 302 ist an seiner oberen Stirnseite fluiddicht mit dem oberen Filtergehäuseteil 206 verbunden, beispielsweise durch eine Klebung.

Das Filtermedium 302 ist dafür ausgelegt, Partikel aus einer das Filtermedium 302 durchströmenden Flüssigkeit abzuscheiden. Bevorzugt werden dabei Partikel ab einer Größe von ungefähr 4µm bis 10µm und darüber im Filtermedium 302 zurückgehalten. Das Filtermedium 302 kann dabei aus einem Material oder aus mehreren Materialien gebildet sein, dass bzw. die hydrophil und/oder hydrophob sind. Im dargestellten Ausführungsbeispiel ist das Filtermedium 302 derart gestaltet, dass an seiner Außenseite in der Flüssigkeit befindliches Wasser abgeschieden wird, welches aufgrund der Schwerkraftwirkung in den im unteren Filtergehäuseteil 208 befindlichen Wassersammelraum 700 gelangt.

Das Filterelement 300 mit seinem Filtermedium 302 wird im dargestellten Ausführungsbeispiel von seiner Außenseite her nach innen radial durchströmt, wobei die Außenseite die Rohseite 320 darstellt, in der die Flüssigkeit mit Partikeln und Wasser behaftet ist. Im Innern des Filterelements 300, also in der Aussparung 330, befindet sich die Reinseite 310, in der die Flüssigkeit von Partikeln und Wasser gereinigt vorliegt.

Das obere Filtergehäuseteil 206 weist eine in der Figur nach oben weisende, im Wesentlichen quer zur Schwerkraftrichtung 600 verlaufende, erste Wandung 210 auf und eine zylindrisch umlaufende zweite Wandung 212, welche als Seitenwand ausgebildet ist und sich im Wesentlichen parallel zur Schwerkraftrichtung 600 erstreckt. Der obere Teil weist somit die Form eines umgedrehten Bechers auf. An der als Seitenwand ausgebildeten zweiten Wandung 212 ist ein Zuführ-Kanal 450 angeordnet, durch welchen die ungefilterte Flüssigkeit der Rohseite 320 des Flüssigkeitsfilters zugeführt wird. Der Zuführ-Kanal 450 kann auch an bzw. in der ersten Wandung 210 angeordnet sein, in der dargestellten Figur also an der oberen Seite. Die erste Wandung 210 weist ungefähr mittig einen Auslass-Kanal 220 auf, durch welchen gereinigte Flüssigkeit das Filtergehäuse 200 verlassen kann. An der Außenseite 204 des Filtergehäuses 200 ist ein Abführrohr 410 angeordnet, welches einen Abführ-Kanal 400 aufweist. Der Abführ-Kanal 400 und das Abführrohr 410 wird als außerhalb des Filtergehäuses 200 liegend betrachtet und ist somit nicht als Teil des Filtergehäuses 200 im engeren Sinne zu betrachten, auch wenn die Wandung des Abführrohrs 410 wenigstens zum Teil einstückig mit der ersten Wandung 210 des Filtergehäuses 200 ausgebildet ist. Der Abführ-Kanal 400 ist über den in der ersten Wandung 210 des Filtergehäuses 200 ausgebildeten Auslass-Kanal 220 mit der Reinseite 310 fluidleitend verbunden. Ins Innere 202 des Filtergehäuses 200 ragt ein Tauchrohr 250 mit einem Tauchrohr-Kanal 252 von der ersten Wandung 210 des Filtergehäuses in die Reinseite 310 hinein ab. Im dargestellten Ausführungsbeispiel ragt das Tauchrohr 250 also ins Innere der Aussparung 330 des Filterelements 300 ab. Das Tauchrohr 250 weist eine Tauchrohrachse 254 entlang seiner Erstreckungsrichtung auf. Im dargestellten Ausführungsbeispiel verläuft die Tauchrohrachse 254 parallel zur Längsachse 354 des Filterelements 300 bzw. ist identisch mit der Längsachse 354 des Filterelements 300.

Schließlich weist das Filtergehäuse 200 in seiner ersten Wandung 210 einen Entlüftungs-Kanal 500 auf, welcher neben dem Tauchrohrkanal 252 und dem damit verbundenen Auslass-Kanal 220 und damit separat vom Tauchrohrkanal 252 und dem Auslasskanal 220 ausgebildet ist. Es ist denkbar, dass nicht nur ein Entlüftungs-Kanal 500 vorgesehen ist, sondern dass um das Tauchrohr 250 herum mehrere Entlüftungs-Kanäle 500 in gleich bleibendem Abstand oder in zueinander variierenden Abständen angeordnet sind. Der Entlüftungs-Kanal 500 öffnet sich auf seiner einen Seite ins Innere 202 des Filtergehäuses 200 in Richtung der Reinseite 310. Auf seiner anderen Seite mündet der Entlüftungs-Kanal 500 in den Abführ-Kanal 400.

Beim Durchgang der Flüssigkeit durch das Filterelement 300 tritt ein Druckabfall auf, der dazu führen kann, dass in der Flüssigkeit gelöste Luft im Bereich des niedrigeren Drucks, also in der Aussparung 330, entgast und entgegengesetzt der Schwerkraftrichtung 600 in der Aussparung 330 aufgrund der geringeren Dichte von Luft gegenüber der Flüssigkeit nach oben aufsteigt. Die derart von der Flüssigkeit getrennte Luft sammelt sich im oberen Bereich der Aussparung 330 unmittelbar unter der ersten Wandung 210 des Filtergehäuses 200. Das ins Innere der Aussparung 330, in Schwerkraftrichtung 600 hineinragenden Tauchrohr 250 verhindert dabei, dass die nach oben steigenden Luftblasen bzw. die sich am oberen Ende der Aussparung 330 gesammelte Luftblase in den Abführ-Kanal 400 gelangt und in dem Flüssigkeitsfilter 100 nachgelagerten Komponenten Schäden anrichtet. Der Entlüftungs-Kanal 500 dient dazu, dass die Filterwirkung nicht durch eine sich stetig vergrößernde Luftmenge im oberen Teil der Aussparung 330 beeinträchtigt wird bzw. dass die sich unter der ersten Wandung 210 ansammelnde Luftblase das untere Ende des Tauchrohr 250 erreicht und über den Tauchrohrkanal 252 und den Auslass-Kanal 220 in den Abführ-Kanal 400 strömen kann.

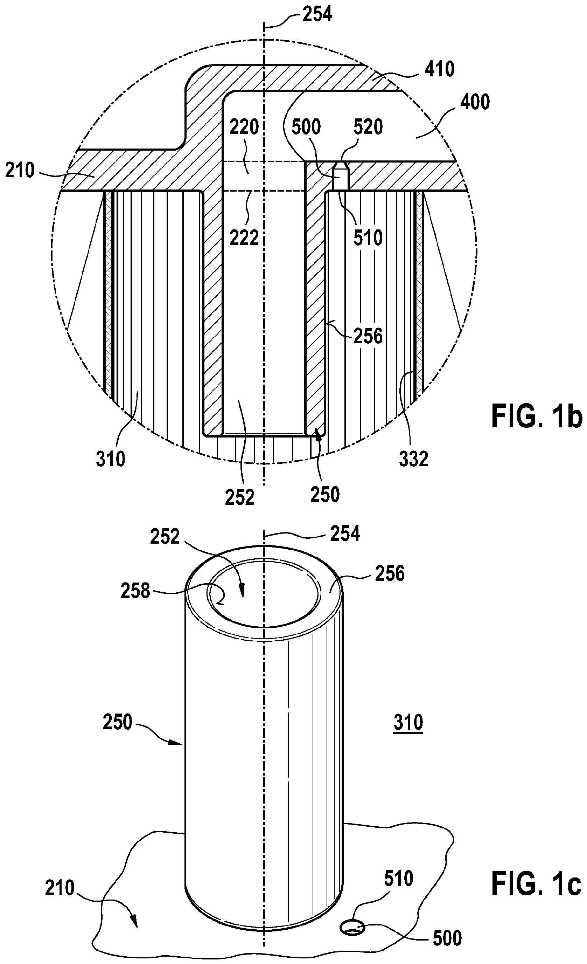

In Fig. 1b ist der Entlüftungs-Kanal 500 mit seiner der Reinseite 310 zuweisenden Innenöffnung 510 und seinem dem Abführ-Kanal 400 zuweisenden Ende 520 neben dem Tauchrohrkanal 252 vergrößerte dargestellt. Der gegenüber der Fig. 1a vergrößerter Ausschnitt zeigt, dass der Entlüftungs-Kanal 500 im Wesentlichen parallel zum Tauchrohrkanal 252 verläuft. Der Entlüftungs-Kanal 500 verläuft in einem Bereich zwischen der Tauchrohrwandung 256 und der Aussparungs-Innenwand 332. Der Entlüftungs-Kanal 500 ist vorzugsweise am höchstgelegenen Teil der ersten Wandung 210 angeordnet, so dass durch ihn die komplette in der Aussparung 330 befindliche Luft in den Abführ-Kanal 400 entlüftet werden kann. Im dargestellten Ausführungsbeispiel ist das Tauchrohr 250 einstückig mit der ersten Wandung 210 des oberen Filtergehäuseteils 206 ausgebildet. Es ist jedoch auch möglich, dass das Tauchrohr 250 als zunächst vom Filtergehäuse 200 separat hergestelltes Teil vorliegt und erst in einem weiteren Fertigungsschritt an der ins Innere 202 weisenden Seite der ersten Wandung 210 festgelegt wird. Dabei wird das Tauchrohr 250 derart an der ersten Wandung 210 festgelegt, dass der Tauchrohrkanal 252 mit dem dem Innern 202 des Filtergehäuses 200 zuweisenden Ende 222 des Auslass-Kanals 220 fluchtend verbunden ist und das Tauchrohr 250 fluiddicht an der ersten Wandung 210 festgelegt ist. Auf diese Weise ist es nicht möglich, dass die sich im oberen Teil des oberen Filtergehäuseteils 206 ansammelnde Luft an der Schnittstelle zwischen Tauchrohr 250 und erster Wandung 210 über den Auslass-Kanal 220 in den Abführ-Kanal 400 gelangt. In der Figur ist dargestellt, dass der Entlüftungs-Kanal 500, welcher in der ersten Wandung 210 in vertikaler Richtung verläuft, an seinem Ende 520 einen sich verjüngenden Durchmesser aufweist. Durch die Größe dieses Durchmessers lässt sich gezielt die Größe der in den Abführ-Kanal 400 perlenden Luftbläschen sowie die Entlüftungsrate gezielt einstellen. Die Luftbläschen, welche an dem Ende 520 des Entlüftungs-Kanal 500 austreten und dort zunächst von Adhäsionskräften festgehalten werden, werden durch die im Abführ-Kanal 400 strömende gereinigte Flüssigkeit mitgerissen, so dass das nächste Bläschen durch das Ende 520 hindurchtreten kann. Das Risiko einer Vereinigung zweier oder von noch mehr Luftbläschen zu einer größeren Luftblase wird auf diese Weise stark reduziert.

Fig. 1c zeigt eine Aufsicht von der Reinseite 310 her in den Tauchrohrkanal 252 mit der Tauchrohr Wandung 256 und der Tauchrohrkanal-Innenwand 258. Neben dem Tauchrohr 250 ist der parallel zur Tauchrohrachse 254 verlaufende Entlüftungs-Kanal 500 mit seiner zur Reinseite gewandten Innenöffnung 510 zu erkennen.

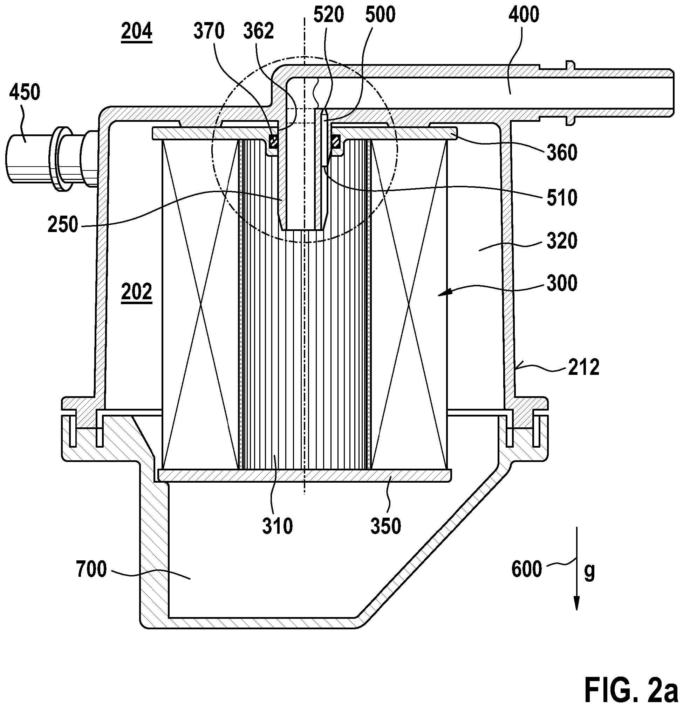

Fig. 2a zeigt ein weiteres Ausführungsbeispiel der Erfindung. Im Unterschied zum Ausführungsbeispiel aus Fig. 1a ist das Filterelement 300 in diesem Ausführungsbeispiel mit einer zweiten Endkappe 360 ausgebildet, welche fluiddicht an der oberen Stirnseite des Filtermediums 302 festgelegt ist, beispielsweise durch eine Klebung, ähnlich wie die erste Endkappe 350 an der Unterseite des Filterelements 300. Das Tauchrohr 250 ist in diesem Ausführungsbeispiel durch eine zentrisch gelegene Endkappen-Öffnung 362 in der zweiten Endkappe 360 ins Innere des Filterelements 300 auf die Reinseite 310 durchgeführt. Das Filterelement 300 ist durch an der Innenseite der Endkappen-Öffnung 362 angeordnete Dichtmittel 370, z.B. O-Ringe, fluiddicht gegen das Tauchrohr 250 abgedichtet. Auf diese Weise bleibt die Rohseite 320 fluiddicht von der Reinseite 310 getrennt. Der Entlüftungs-Kanal 500 ist benachbart zur Tauchrohrwandung 256 ausgebildet, wobei ein Teil der Wandung 502 des Entlüftungs-Kanals 500 durch die Tauchrohrwandung 256 gebildet ist.

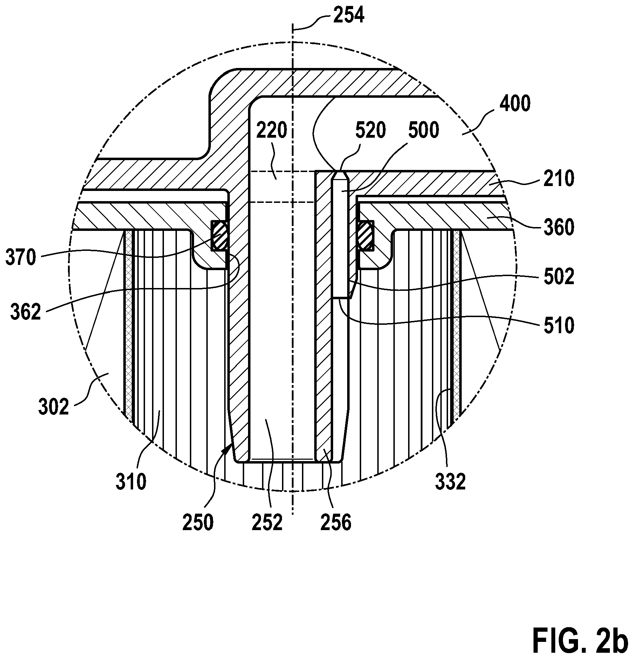

Fig. 2b zeigt einen vergrößerten Ausschnitt des Tauchrohrs 250 und des Entlüftungs-Kanals 500. Die Wandung 502 des Entlüftungs-Kanals 500 erstreckt sich von der ersten Wandung 210 des Filtergehäuses 200 durch die Endkappen-Öffnung 362 hindurch bis ins Innere der Aussparung 350 des Filterelements 300 auf die Reinseite 310.

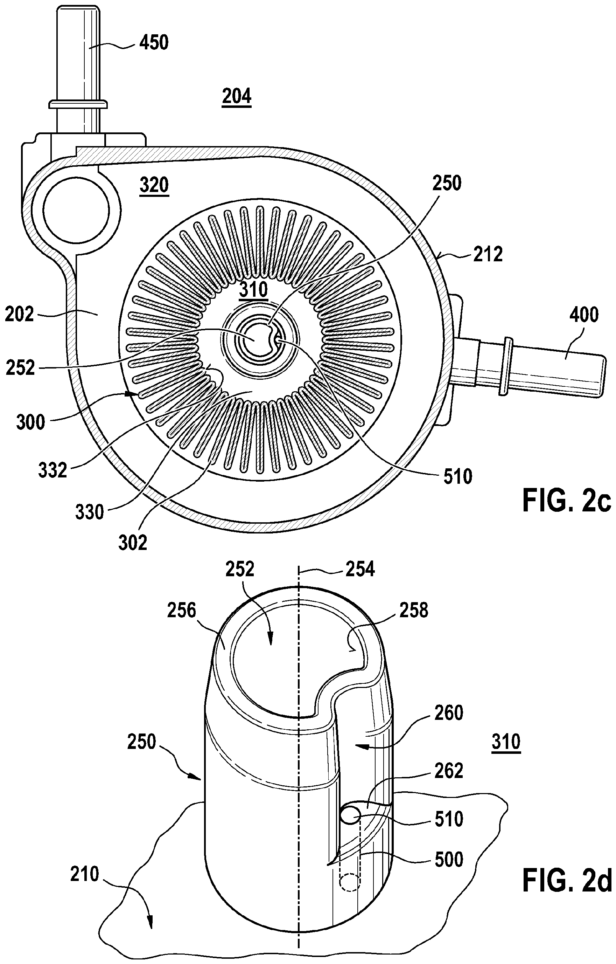

Fig. 2c zeigt einen Querschnitt durch den Flüssigkeitsfilter 100 quer zur Längsachse 254 des Tauchrohrs 250. Die Figur zeigt einen Zuführ-Kanal 450, durch welchen die ungefilterte Flüssigkeit der Rohseite 320 des Flüssigkeitsfilters zugeführt wird. Außerdem ist das sternförmig gefaltete Filtermedium 302 des hohlzylindrischen Filterelements 300 zu erkennen. In der Figur nach rechts weisend ist der Abführ-Kanal 400 zu erkennen, durch welchen die gereinigte Flüssigkeit aus dem Flüssigkeitsfilter 100 abgeleitet wird. Im Zentrum der Abbildung ist das Tauchrohr 250 mit dem Tauchrohrkanal 252 in einer Aufsicht zu sehen. Das Tauchrohr 250 weist dabei einen im Wesentlichen kreisförmigen Querschnitt auf, welcher an der in der Figur nach rechts zum Abführ-Kanal 400 weisenden Seite eine Einwölbung 260 ins Innere des Tauchrohrs 250 aufweist. In dieser Einwölbung 260 ist der Entlüftungs-Kanal 500 mit seiner Innenöffnung 510 angeordnet. Der Entlüftungs-Kanal 500 verläuft dabei räumlich getrennt und separat vom Tauchrohrkanal 252, parallel zu diesem.

In Fig. 2d ist eine perspektivische Aufsicht auf das Tauchrohr 250 und den Tauchrohrkanal 252 dargestellt. Die Tauchrohrwandung 256 weist eine Einwölbung 260 auf, welche sich längst der Tauchrohrachse 254 erstreckt. Auf ihrer der ersten Wandung 210 zugewandten Seite weist die Einwölbung 260 eine quer zur Tauchrohrachse 254 verlaufende Begrenzungswand 262 auf. Diese Begrenzungswand 262 verläuft ungefähr parallel zur ersten Wandung 210. Die dem Innern 202 des Filtergehäuses 200 zuweisende Innenöffnung 510 des Entlüftungs-Kanals ist in dieser Begrenzungswand 262 angeordnet. Der Entlüftungs-Kanal 500 verläuft im Wesentlichen parallel zum Tauchrohrkanal 252 und separat von diesem in der Tauchrohrwandung 256 des Tauchrohrs 250. Durch diese Konstruktion wird eine besonders kompakte Entlüftungseinrichtung geschaffen. Dadurch ist es möglich, im quer zur Längsachse 254 des Tauchrohrs 250 verlaufenden Querschnitt des Filterelements 300 eine möglichst große Filterfläche unterzubringen, d.h. die Aussparung 330 möglichst gering zu halten bzw. das Filterelement 300 bei gleicher Filterfläche in seinem Außendurchmesser zu reduzieren. Auf diese Weise wird die Standzeit des Filterelements 300 verlängert bzw. lässt sich ein Filterelement 300 mit gleicher Standzeit mit kleinerem Bauraum realisieren, als dies bei einer weit von dem Tauchrohr 250 beabstandeten Entlüftungs-Kanal 500 möglich wäre. Außerdem wird es dadurch möglich, das Tauchrohr 250 und den Entlüftungs-Kanal 500 in einem einzigen Fertigungsschritt, beispielsweise als Spritzgussteil aus einem Kunststoff wie zum Beispiel Polyamid (PA) oder glasfaserverstärktem Kunststoff herzustellen.

Der in den Figs. 2a bis 2d dargestellte Entlüftungs-Kanal 500, welcher in die Tauchrohrwandung 256 teilweise integriert ist, kann selbstverständlich auch in dem Flüssigkeitsfilter 100 gemäß dem ersten Ausführungsbeispiel zur Anwendung kommen.

Während der Abführ-Kanal 400 im ersten und zweiten Ausführungsbeispiel der Figuren 1a bis 2d im Wesentlichen senkrecht zur Erstreckungsrichtung der Tauchrohrachse 254 verläuft ist auch ein Ausführungsbeispiel denkbar, in welchem der Abführ-Kanal 400 im Wesentlichen parallel zur Tauchrohrachse 254 an der Außenseite 204 des Filtergehäuses 200 verläuft.

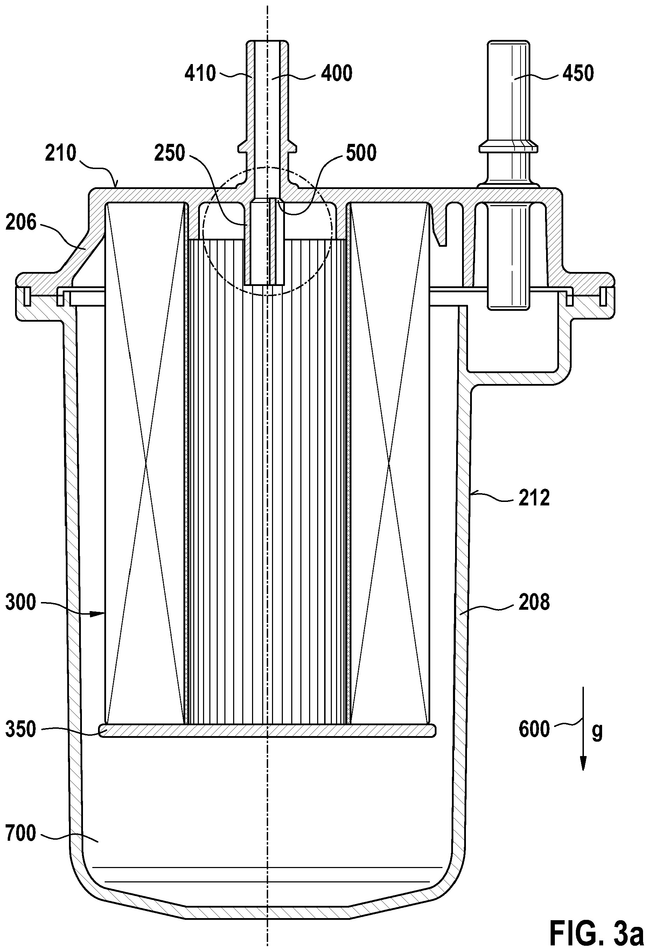

Fig. 3a zeigt ein drittes Ausführungsbeispiel des erfindungsgemäßen Flüssigkeitsfilters 100 und des erfindungsgemäßen Filtergehäuses 200. In diesem Ausführungsbeispiel ragt das Abführrohr 410 mit dem Abführ-Kanal 400 im wesentlichen parallel zur Längsachse 254 des Tauchrohrs 250 von der ersten Wandung 210 des Filtergehäuses 200 auf der Außenseite 204 des Filtergehäuses 200 von diesem ab. In diesem Ausführungsbeispiel ist der untere Gehäuseteil 208 becherartige ausgebildet und der obere Gehäuseteil 206 in Form eines Deckels ausgebildet.

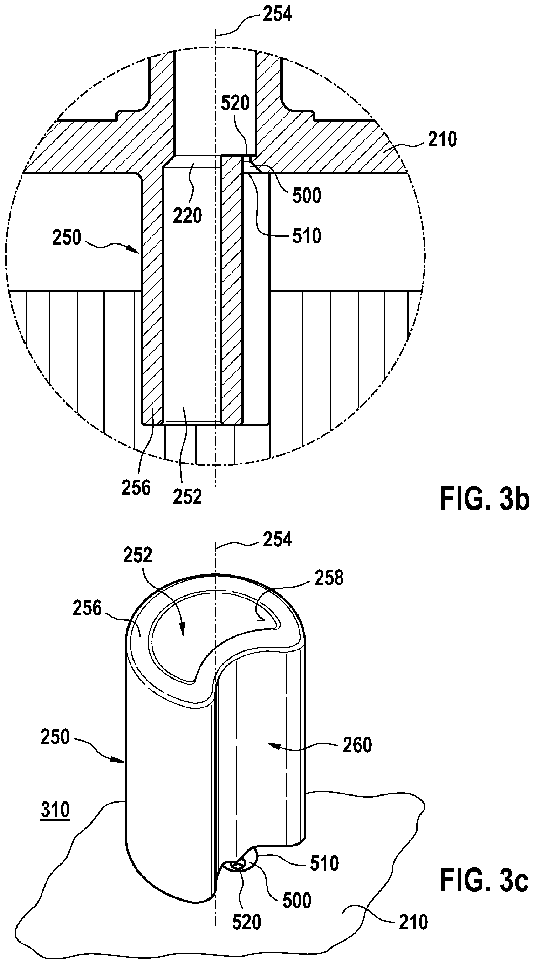

In Fig. 3b und Fig. 3c ist das Tauchrohr 250 mit dem Entlüftungs-Kanal 500 vergrößert dargestellt. Das Tauchrohr 250 weist einen im Wesentlichen kreisförmigen Querschnitt mit einer Einwölbung 260 auf, wobei sich die Einwölbung 260 entlang des gesamten Tauchrohrs 250 bis zur ersten Wandung 210 des Filtergehäuses 200 erstreckt. Am Übergang vom Tauchrohr 250 zur ersten Wandung 210 öffnet sich der Entlüftungs-Kanal 500 mit seiner der Reinseite 310 zugewandten Innenöffnung 510. In Fig. 3c ist zu erkennen, wie sich der Entlüftungs-Kanal 500 trichterförmig zu seinem dem Abführ-Kanal 400 zugewandten Ende 520 hin verjüngt. Im dargestellten Ausführungsbeispiel verläuft der Entlüftungs-Kanal 500 in der ersten Wandung 210, wie in Fig. 3c dargestellt. Die erste Wandung 210 des Filtergehäuses 200 weist, wie in Fig. 3b zu erkennen ist, in diesem Ausführungsbeispiel im Bereich des Auslass-Kanals 220 nur eine äußerst geringe Wandstärke auf.

Auch in diesem Ausführungsbeispiel verläuft der Entlüftungs-Kanal 500 durch die erste Wandung 210 zwischen der Reinseite 310 und dem Abführ-Kanal 400, wobei der Entlüftungs-Kanal 500 im Wesentlichen in vertikaler Richtung verläuft und sich zum Beispiel an der höchsten Stelle des Innern 202 des Filtergehäuses befindet. Auf diese Weise wird eine möglichst vollständige Entlüftung des Innern 202 des Filtergehäuses 200 von sich dort ansammelnder Luft ermöglicht.

In allen dargestellten Ausführungsbeispielen kann das Abführrohr 410 zusammen mit dem Tauchrohr 250 und der ersten Wandung 210 sowie dem darin angeordneten Entlüftungs-Kanal 500 einstückig ausgebildet sein und beispielsweise durch ein Spritzguss-Verfahren hergestellt sein. Auf diese Weise lässt sich der gesamte obere Gehäuseteil 206 in einem einzigen Herstellungsschritt einteilig herstellen. Es ist genauso gut möglich, das Abführrohr 410 und/oder das Tauchrohr 250 als zunächst separat von der ersten Wandung 210 hergestellte Bauteile zu produzieren und erst in einem weiteren Schritt das Tauchrohr 250, das Abführrohr 410 und die erste Wandung 210 zu dem oberen Gehäuseteil 206 zusammenzusetzen und an den Montagestellen fluiddicht gegeneinander abzudichten. Eine mehrstückige Herstellungsweise erlaubt zum Beispiel einen großen Spielraum bei der Gestaltung der Form des Tauchrohrs 250.

Der erfindungsgemäße Flüssigkeitsfilter 100 zur Filterung von Partikeln aus einer Flüssigkeit und das erfindungsgemäße Filtergehäuse 200 für einen Flüssigkeitsfilter 100 können Verwendung finden als Flüssigkeitsfilter 100 für die Filterung von Kraftstoffen wie zum Beispiel Benzin, Diesel oder Motoröl für die Verwendung in oder an Brennkraftmaschinen. Ebenso ist eine Verwendung als Flüssigkeitsfilter 100 für Hydrauliköl oder Getriebeöl, beispielsweise in der Verwendung für Getriebe von Windkraftanlagen denkbar. Auch ist der Einsatz zur Filterung von Harnstofflösung bei DENOX-Anwendungen möglich.

## Patentansprüche

1. Flüssigkeitsfilter zur Filterung von Partikeln aus einer Flüssigkeit, umfassend
-- ein Filtergehäuse (200),
-- ein Filterelement (300), das im Innern (202) des Filtergehäuses (200) angeordnet ist und dort eine Reinseite (310) von einer Rohseite (320) trennt,
-- wobei das Filtergehäuse (200) einen auf einer Außenseite (204) des Filtergehäuses (200) angeordneten Abführ-Kanal (400) aufweist, der über einen in einer ersten Wandung (210) des Filtergehäuses (200) ausgebildeten Auslass-Kanal (220) mit der Reinseite (310) fluidleitend verbunden ist,
-- weiterhin umfassend wenigstens einen benachbart zum Auslass-Kanal (220) angeordneten Entlüftungs-Kanal (500), der in der ersten Wandung (210) des Filtergehäuses (200) ausgebildet ist,
**dadurch gekennzeichnet, dass**
der wenigstens eine Entlüftungs-Kanal (500) die Reinseite (310) im Innern (202) des Filtergehäuses (200) mit dem Abführ-Kanal (400) verbindet.

2. Flüssigkeitsfilter nach Anspruch 1, **dadurch gekennzeichnet, dass** der wenigstens eine Entlüftungs-Kanal (500) die Reinseite (310) mit dem Abführ-Kanal (400) unterbrechungsfrei verbindet.

3. Flüssigkeitsfilter nach Anspruch 1 oder 2, **dadurch gekennzeichnet, dass** am und im Entlüftungs-Kanal (500) keine beweglichen Teile angeordnet sind.

4. Flüssigkeitsfilter nach einem der Ansprüche 1 bis 3, **dadurch gekennzeichnet, dass**
an dem dem Inneren (202) des Filtergehäuses (200) zuweisenden Ende (222) des Auslass-Kanals (220) ein ins Innere (202) des Filtergehäuses (200) hineinragendes Tauchrohr (250) mit einem Tauchrohrkanal (252) angeordnet ist, wobei der Tauchrohrkanal (252) mit dem Abführ-Kanal (400) fluidleitend verbunden ist.

5. Flüssigkeitsfilter nach Anspruch 4, **dadurch gekennzeichnet, dass** die dem Inneren (202) des Filtergehäuses (200) zuweisende Öffnung (510) des wenigstens einen Entlüftungs-Kanals (500) zwischen dem Tauchrohrkanal (252) und einer als Seitenwand ausgebildeten zweiten Wandung (212) des Filtergehäuses (200) angeordnet ist.

6. Flüssigkeitsfilter nach einem der Ansprüche 4 oder 5, **dadurch gekennzeichnet, dass**
dass die den wenigstens einen Entlüftungs-Kanal (500) aufweisende erste Wandung (210) des Filtergehäuses (200) zusammen mit dem Tauchrohr (250) und einem den Abführ-Kanal (400) umschließenden Abführrohr (410) einteilig ausgebildet ist.

7. Flüssigkeitsfilter nach einem der Ansprüche 1 bis 6, **dadurch gekennzeichnet, dass**
der wenigstens eine Entlüftungs-Kanal (500) sich in normaler Einbaulage des Flüssigkeitsfilters (100) entlang der Schwerkraftrichtung (600) erstreckt und die erste Wandung (210) bezüglich der Schwerkraftrichtung (600) als obere Wandung des Filtergehäuses (200) ausgebildet ist.

8. Flüssigkeitsfilter nach einem der Ansprüche 4 bis 7, **dadurch gekennzeichnet, dass**
das Filterelement (300) zylindrisch ausgebildet ist und entlang seiner Längsachse (354) eine Aussparung (330) aufweist, wobei die Aussparung (330) die Reinseite (310) umschließt, wobei das Tauchrohr (250) in die Aussparung (330) hineinragt und wobei die dem Inneren (202) des Filtergehäuses (200) zuweisende Innenöffnung des wenigstens einen Entlüftungs-Kanals (500) zwischen der Tauchrohrkanal-Innenwand (258) und der Aussparungs-Innenwand (332) angeordnet ist.

9. Flüssigkeitsfilter nach einem der Ansprüche 4 bis 8, **dadurch gekennzeichnet, dass**
das Tauchrohr (250) entlang seiner Erstreckungsrichtung eine Tauchrohrachse (254) aufweist, wobei die Tauchrohrwandung (256) eine Einwölbung (260) aufweist, die sich längs der Tauchrohrachse (254) erstreckt, wobei die Einwölbung (260) wenigstens eine quer zur Tauchrohrachse (254) verlaufende Begrenzungswand (262) aufweist, wobei die dem Innern (202) des Filtergehäuses (200) zuweisende Innenöffnung (510) des wenigstens einen Entlüftungs-Kanals (500) in der Begrenzungswand (262) angeordnet ist.

10. Flüssigkeitsfilter nach einem der Ansprüche 1 bis 9, **dadurch gekennzeichnet, dass**
der wenigstens eine Entlüftungs-Kanal (500) in wenigstens einem Querschnitt einen Durchmesser von 0,05mm bis 2mm aufweist, insbesondere einen Durchmesser von 0,1mm bis 1mm.

11. Flüssigkeitsfilter nach einem der Ansprüche 1 bis 10, **dadurch gekennzeichnet, dass**
sich der Durchmesser des wenigstens einen Entlüftungs-Kanals (500) entlang seiner Erstreckungsrichtung in der ersten Wandung (210) an seinem dem Abführ-Kanal (400) zuweisenden Ende (520) verjüngt.

## Claims

1. Liquid filter for filtering particles out of a liquid, comprising
-- a filter housing (200),
-- a filter element (300) which is arranged in the interior (202) of the filter housing (200) and, there, separates a clean side (310) from an untreated side (320),
-- wherein the filter housing (200) has a discharge duct (400) which is arranged on an outer side (204) of the filter housing (200) and which is connected in a fluid-conducting manner to the clean side (310) via an outlet duct (220) formed in a first wall (210) of the filter housing (200),
-- furthermore comprising at least one venting duct (500) which is arranged adjacently to the outlet duct (220) and which is formed in the first wall (210) of the filter housing (200),
**characterized in that**
the at least one venting duct (500) connects the clean side (310) in the interior (202) of the filter housing (200) to the discharge duct (400).

2. Liquid filter according to Claim 1, **characterized in that**
the at least one venting duct (500) connects the clean side (310) to the discharge duct (400) in an uninterrupted manner.

3. Liquid filter according to Claim 1 or 2, **characterized in that**
no moving parts are arranged at and in the venting duct (500).

4. Liquid filter according to one of Claims 1 to 3, **characterized in that**
an immersion pipe (250) projecting into the interior (202) of the filter housing (200) and having an immersion pipe duct (252) is arranged at that end (222) of the outlet duct (220) which faces the interior (202) of the filter housing (200), wherein the immersion pipe duct (252) is connected in a fluid-conducting manner to the discharge duct (400).

5. Liquid filter according to Claim 4, **characterized in that**
that opening (510) of the at least one venting duct (500) which faces the interior (202) of the filter housing (200) is arranged between the immersion pipe duct (252) and a second wall (212), formed as a side wall, of the filter housing (200).

6. Liquid filter according to either of Claims 4 and 5, **characterized in that**
the first wall (210), having the at least one venting duct (500), of the filter housing (200) is formed in one piece together with the immersion pipe (250) and a discharge pipe (410) surrounding the discharge duct (400).

7. Liquid filter according to one of Claims 1 to 6, **characterized in that**
the at least one venting duct (500), in the normal installation position of the liquid filter (100), extends along the direction of gravitational force (600), and the first wall (210) is formed as an upper wall of the filter housing (200) with respect to the direction of gravitational force (600).

8. Liquid filter according to one of Claims 4 to 7, **characterized in that**
the filter element (300) is of cylindrical form, and has a cutout (330) along its longitudinal axis (354), wherein the cutout (330) surrounds the clean side (310), wherein the immersion pipe (250) projects into the cutout (330), and wherein the inner opening, facing the interior (202) of the filter housing (200), of the at least one venting duct (500) is arranged between the immersion pipe duct inner wall (258) and the cutout inner wall (332).

9. Liquid filter according to one of Claims 4 to 8, **characterized in that**
the immersion pipe (250) has an immersion pipe axis (254) along its direction of extent, wherein the immersion pipe wall (256) has an indentation (260) which extends along the immersion pipe axis (254), wherein the indentation (260) has at least one delimiting wall (262) which extends transversely with respect to the immersion pipe axis (254), wherein the inner opening (510), facing the interior (202) of the filter housing (200), of the at least one venting duct (500) is arranged in the delimiting wall (262).

10. Liquid filter according to one of Claims 1 to 9, **characterized in that**
the at least one venting duct (500) has a diameter of 0.05 mm to 2 mm, in particular a diameter of 0.1 mm to 1 mm, in at least one cross section.

11. Liquid filter according to one of Claims 1 to 10, **characterized in that**
the diameter of the at least one venting duct (500), along its direction of extent in the first wall (210), narrows at its end (520) which faces the discharge duct (400).

## Revendications

1. Filtre à liquide servant à la filtration de particules à partir d'un liquide, comportant
- un boîtier de filtre (200),
- un élément de filtre (300) qui est disposé dans l'intérieur (202) du boîtier de filtre (200) et y sépare un côté propre (310) d'un côté brut (320),
- dans lequel le boîtier de filtre (200) comprend un canal d'évacuation (400) disposé sur un côté extérieur (204) du boîtier de filtre (200), lequel canal d'évacuation est relié de manière fluidique au côté propre (310) par le biais d'un canal de sortie (220) réalisé dans une première paroi (210) du boîtier de filtre (200),
- comportant en outre au moins un canal de purge d'air (500) disposé de manière adjacente au canal de sortie (220), lequel canal de purge d'air est réalisé dans la première paroi (210) du boîtier de filtre (200), **caractérisé en ce que**
l'au moins un canal de purge d'air (500) relie le côté propre (310) dans l'intérieur (202) du boîtier de filtre (200) au canal d'évacuation (400).

2. Filtre à liquide selon la revendication 1, **caractérisé en ce que**
l'au moins un canal de purge d'air (500) relie le côté propre (310) au canal d'évacuation (400) sans interruption.

3. Filtre à liquide selon la revendication 1 ou 2, **caractérisé en ce**
**qu'**aucune partie mobile n'est disposée sur ou dans le canal de purge d'air (500).

4. Filtre à liquide selon l'une des revendications 1 à 3, **caractérisé en ce**
**qu'**un tube plongeur (250) doté d'un canal de tube plongeur (252) et pénétrant dans l'intérieur (202) du boîtier de filtre (200) est disposé à l'extrémité (222) du canal de sortie (220) tournée vers l'intérieur (202) du boîtier de filtre (200), le canal de tube plongeur (252) étant relié de manière fluidique au canal d'évacuation (400).

5. Filtre à liquide selon la revendication 4, **caractérisé en ce que**
l'ouverture (510) de l'au moins un canal de purge d'air (500) tournée vers l'intérieur (202) du boîtier de filtre (200) est disposée entre le canal de tube plongeur (252) et une deuxième paroi (212) du boîtier de filtre (200) réalisée comme paroi latérale.

6. Filtre à liquide selon l'une des revendications 4 ou 5, **caractérisé en ce que**
la première paroi (210) du boîtier de filtre (200) dotée de l'au moins un canal de purge d'air (500) est réalisée d'un seul tenant conjointement avec le tube plongeur (250) et un tube d'évacuation (410) entourant le canal d'évacuation (400).

7. Filtre à liquide selon l'une des revendications 1 à 6, **caractérisé en ce que**
l'au moins un canal de purge d'air (500) s'étend le long de la direction de la force de gravité (600) dans la position d'installation normale du filtre à liquide (100) et la première paroi (210) est réalisée comme paroi supérieure du boîtier de filtre (200) par rapport à la direction de la force de gravité (600).

8. Filtre à liquide selon l'une des revendications 4 à 7, **caractérisé en ce que**
l'élément de filtre (300) est réalisé de manière cylindrique et comprend un évidement (330) le long de son axe longitudinal (354), l'évidement (330) entourant le côté propre (310), le tube plongeur (250) pénétrant dans l'évidement (330) et l'ouverture intérieure de l'au moins un canal de purge d'air (500) tournée vers l'intérieur (202) du boîtier de filtre (200) étant disposée entre la paroi intérieure (258) de canal de tube plongeur et la paroi intérieure (332) d'évidement.

9. Filtre à liquide selon l'une des revendications 4 bis 8, **caractérisé en ce que**
le tube plongeur (250) présente un axe de tube plongeur (254) le long de sa direction d'étendue, la paroi de tube plongeur (256) comprenant une concavité (260) qui s'étend le long de l'axe de tube plongeur (254), la concavité (260) comprenant au moins une paroi de limitation (262) s'étendant transversalement à l'axe de tube plongeur (254), l'ouverture intérieure (510) de l'au moins un canal de purge d'air (500) tournée vers l'intérieur (202) du boîtier de filtre (200) étant disposée dans la paroi de limitation (262).

10. Filtre à liquide selon l'une des revendications 1 à 9, **caractérisé en ce que**
l'au moins un canal de purge d'air (500) présente, dans au moins une section transversale, un diamètre de 0,05 mm à 2 mm, en particulier un diamètre de 0,1 mm à 1 mm.

11. Filtre à liquide selon l'une des revendications 1 à 10, **caractérisé en ce que**
le diamètre de l'au moins un canal de purge d'air (500) se rétrécit le long de sa direction d'étendue dans la première paroi (210) à son extrémité (520) tournée vers le canal d'évacuation (400).
